# EUROPEAN PATENT SPECIFICATION

(11) **EP 2 660 567 B1**
(45) Date of publication and mention of the grant of the patent: **05.04.2017**
(21) Application number: 13166488.0
(22) Date of filing: 03.05.2013
(51) Int. Cl.: G01D 5/347, G01B 7/14

(54) **Sensor head**
Sensorkopf
Tête de capteur

(30) Priority: 04.05.2012 SE 1250455
(43) Date of publication of application: 06.11.2013
(73) Proprietor: LEINE & LINDE AB, 645 21 Strängnäs (SE)
(72) Inventor: Arnstein, Richard, 645 91 Strängnäs (SE); Larsson, Magnus, 635 05 Eskilstuna (SE)
(74) Representative: Zacco Sweden AB

(56) References cited:
- EP-A1- 0 123 618
- DE-A1- 10 354 458
- DE-A1-102005 056 207
- DE-A1-102007 022 765
- DE-A1-102007 059 362
- US-A- 4 746 859
- US-A1- 2008 030 188

## Description

### Technical Area

The present invention relates to a sensor head for an encoder.

### Background

Encoders are often used in environments where they are subjected to much vibration, and often in a heavily contaminated environment. The encoder may, for instance, be used to generate the position values of shaft rotation in a machine. For instance, the encoder may be attached to a rotating shaft in the machine. The encoding disc is caused to rotate as the shaft rotates, and the encoder casing and detector are firmly affixed to the casing of the machine.

Traditionally, an optoelectrical state encoder has been used, which includes an encoding disc that has an optically readable pattern. The disc pattern is read by one or more sensor heads having at least one detector, which each deliver an electric signal in relation to the amount of light that is received in the detector, so that movement of the encoding disc in relation to the detector will be indicated by changes in the electric signal.

The encoding disc includes a periodic pattern, such as a plurality of reflective and non-reflective fields of mutually the same size, for instance. When the encoding disc is twisted or rotated, the change between reflective and non-reflective fields can be detected and a change in angle thus determined.

Besides the use of optical/reflective encoders, there are also encoders for magnetic, magnetoresistive and inductive scanning.

However, when the shafts have very large diameters, such conventional encoders meet its limitation due to the need for specialized mounting, such as toothed belt concepts, that are complicated and expensive. Neither can conventional encoders be used for shaft ends that are inaccessible, nor can conventional encoders be used for hollow shafts. Recently, magnetic encoders have been introduced in the market, including a magnetic tape that can be installed on large shafts more easily and inexpensive compared to the conventional encoders. When a magnetic tape is used, a carrier ring is suitably installed on the shaft, which carrier ring supports the magnetic tape. A sensor head for reading the magnetic tape is arranged with a small air gap close to the magnetic tape on the carrier ring that is arranged on the shaft. In similar way, when a sensor head is used for magnetoresistive, optical/reflective and inductive scanning, the gap between the sensor head and the shaft is arranged with a small air gap.

One problem with the use of magnetic, magnetoresistive, optical/reflective and inductive encoders is that the side of the sensor head housing facing the shaft or the carrier ring has to match the curving of the shaft, as well as any carrier ring on the shaft. This is due to the fact that the detector(s) inside the housing of the sensor head should be arranged as close as possible and with the same distance to the periphery of the shaft, since the reading capability of the detectors decreases with increasing distance. Hence, the side of the sensor head facing the shaft or carrier ring should have the same curvature as the shaft or carrier ring when dual detectors are used. At least two detectors are necessary when using for instance magnetic tape encoders in order to be able to sense the tape without interruptions over the joint on the tape. For practical reasons, a sensor head according to the prior art is provided with dual detectors within its housing. Consequently, for any given shaft diameter, a respective housing of a sensor head is conventionally manufactured with a front wall, facing the shaft/ring, having a given curvature for the specific shaft dimension. Further, in such a conventionally manufactured sensor head, the detectors are fixed in an exact arrangement and other components are also adapted within the housing of the sensor head for the specific shaft dimension. To sum up, all the above mentioned requirements for the sensor head result in a sensor head that is expensive and complicated.

WO 2011018330 A2 discloses a pole wheel arrangement for a rotary encoder, wherein the pole wheel comprises pole wheel segments. The encoder has a sensor head with several sensors.

DE 102005056207 A1 discloses a sensor system for an encoder with at least two sensor elements that can be adjusted independently of each other.

DE102007022765 A1 discloses a sensor module that has a sensor receiver unit attached at a break-through of a housing, particularly a transmission device. A sensor is provided at the sensor receiver unit, where the sensor is stored at the sensor receiver unit in a movable, tiltable or rotatable manner.

The objective of the present invention is to provide a sensor head that eliminates the disadvantages associated with prior art. A further objective is to achieve an improved sensor head that is less expensive and uncomplicated to produce, compared to prior art. It is further an object to accomplish a sensor head for an encoder that can be used for a variety of shaft dimensions.

### Summary of the invention

The above objectives are solved by the present invention as defined in claim 1. It relates to a sensor head for an encoder, comprising a housing and at least two detectors. The detectors are adjustably arranged to the housing. Each detector is arranged in one end of a detector strip comprising a circuit board, and a pivot of the detector strip is arranged at an opposite end of the detector strip. The position of each detector are displaceable in correspondence with a dimension of a shaft to which the sensor head is adapted for installation. Further, the pivot, the detector and a centre of a shaft, when the sensor head is installed to the shaft, are arranged along a straight line when the sensor head is correctly installed.

In accordance with the solution of the present invention, a cost efficient and an uncomplicated sensor head, from a production point of view, is achieved. As a result, the time for delivery can be shortened compared to the manufacturing of prior known sensor heads. The reliability of the sensor head and its components increases since the same components can be used when producing various sizes of sensor heads.

Another advantage is that the sensor head according to the present invention can be used for different shaft diameters and need not to be adapted for any specific shaft dimension. According to the invention, it is easier to set the detectors of the sensor head at equal distance to the carrier ring or shaft.

According to an embodiment of the present invention, the detectors are preferably displaceably arranged within the housing. Further, a front wall of the sensor head facing a shaft may have a concave circular arc shape, as seen in the direction towards the shaft. The front wall of the sensor head facing a shaft can be provided with a slot on the inside of the housing, in which slot the outer end of the detector strip, where a respective detector is arranged, is inserted.

According to yet another embodiment of the present invention, the detectors can be displaceably arranged on the outside of the housing. Consequently, each detector strip with a respective detector is suitably encapsulated in a casing.

Other objectives, embodiments and advantages of the present invention are described in closer detail in the description and in the subsequent patent claims.

### Brief description of the drawings

The invention will hereinafter be described with reference to embodiments of the present invention and the accompanying drawings, in which
Figure 1A schematically shows an encoder assembly in a perspective view in accordance with an embodiment of the present invention,
Figure 1B schematically shows the encoder assembly in Fig. 1A in a side view, where a part of the carrier ring and the sensor head is shown in cross section,
Figure 2 schematically shows a sensor head for an encoder in a front view in accordance with an embodiment of the present invention,
Figure 3A schematically shows in a front view a sensor head for an encoder in accordance with a further embodiment of the present invention,
Figure 3B schematically shows in perspective view the sensor head for an encoder in Fig. 3A,
Figure 4A shows a view from above of a sensor head according to another embodiment of the present invention, with the top of the housing removed,
Figure 4B shows the sensor head in Fig. 4A in a perspective view obliquely from above, and
Figure 4C shows the sensor head in Fig. 4A-B in a cross-sectional top view.

### Detailed description

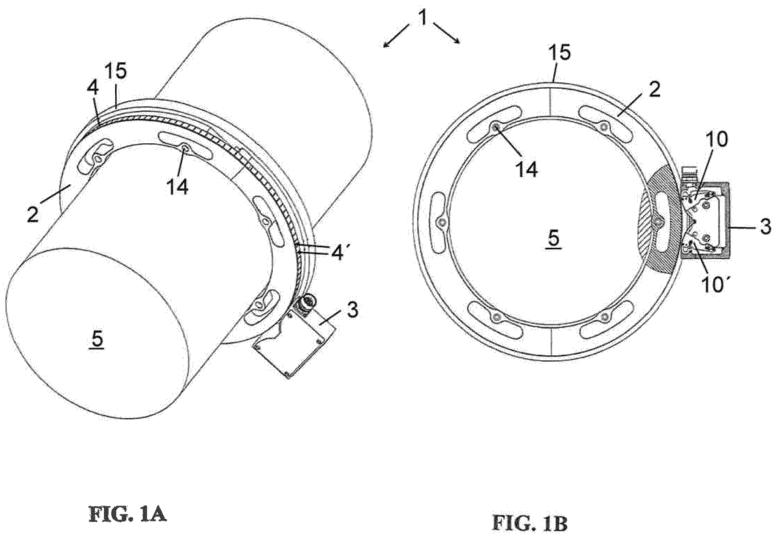

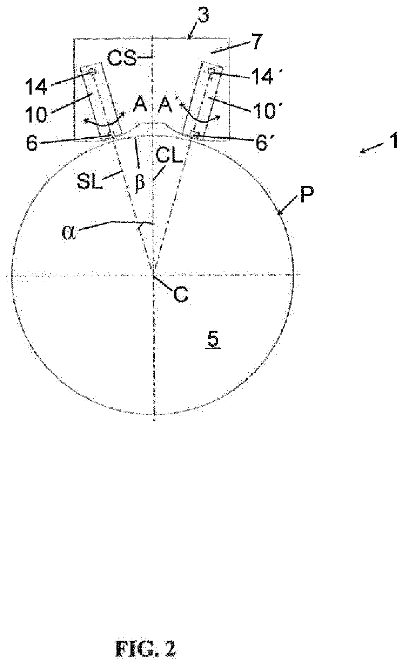

Figs. 1A-B and Fig. 2 shows an encoder assembly 1 in accordance with one embodiment of the present invention. The encoder 1 is suitable for magnetic, magnetoresistive, optical/reflective or inductive scanning and comprises sensing means, hereinafter called sensor head 3, for scanning of a rotatable encoding member 4, such as directly towards a shaft 5 (see Fig. 2) of a machine having an encoding member or towards a carrier ring 2 (see Figs. 1A-B), with the encoding member, mounted on the shaft 5. Hence, the encoding member is caused to rotate as the shaft rotates, and the sensor head 1 is firmly affixed to a casing of the machine (not shown). For instance, in a magnetic encoder the encoding member 4 is a magnetic element(s), such as a magnetic tape with magnetic poles 4', carried directly on the shaft 5 or on a carrier ring 4. The magnetic element(s) can also be e.g. one or more magnets that are attached in plastics and moulded onto a ring where it is magnetized. At least two detectors in the sensor head 3 are necessary when using magnetic tape encoders in order to be able to sense the tape without interruptions over the joint on the magnetic tape with magnetic poles 4'. For all magnetoresistive, optical/reflective and inductive encoders having the similar design with rings and sensor heads, the same basic idea of the present invention can be applicable. According to a preferred embodiment, the present invention relates to magnetic scanning.

Further, according to the embodiment described and shown in Fig. 2, the encoder 1 comprises a housing 7 and at least two detectors 6, 6'. The housing 7 shown in the embodiment of Fig. 2 is preferably a substantially hollow body that has an inner compartment as described further below.

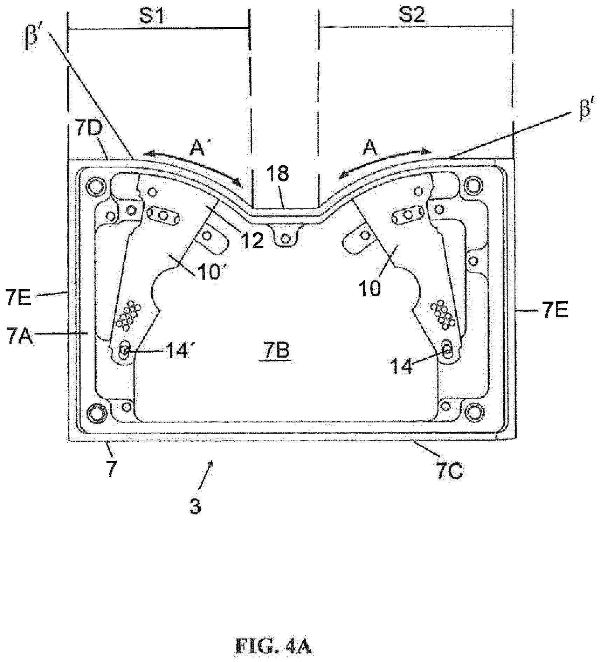

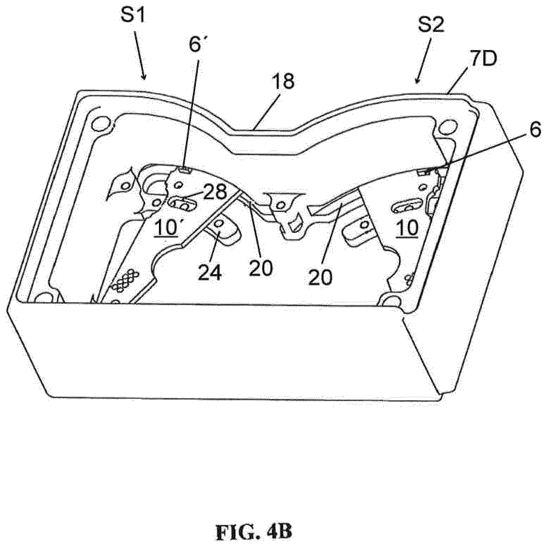

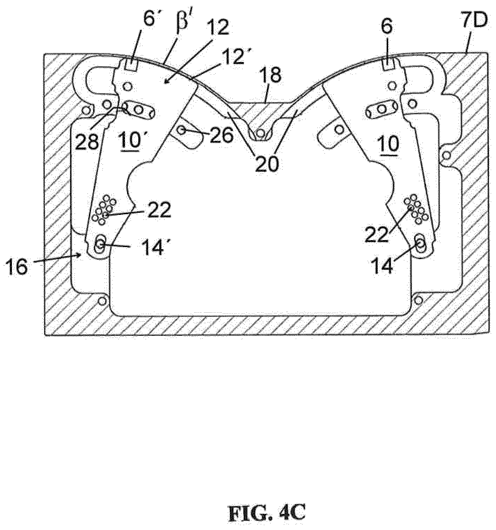

In Fig. 2, a shaft 5 is schematically shown, having an encoding member (not shown) attached on its periphery P. The shaft has a rotational centre C. Further, each detector 6, 6' is arranged on a detector strip 10, 10' comprising a circuit board (not shown). On the detector strip 10, 10', each detector 6, 6' is arranged in one first end 12 (see Figs. 4A-C). The detectors 6, 6' at the first one end 12 of the detector strip 10, 10' should be arranged as close as possible and with the same distance to the periphery P of the shaft 5, since the reading capability of the detectors 6, 6' decreases with increasing distance. Consequently, in order to optimize the reading capability of the detectors, the detector strip 10, 10' is provided with a pivot 14, 14' at a second opposite end 16 (see Figs. 4A-C), compared to the mentioned first end 12. Hence, according to the present invention, the position of the detectors 6, 6' arranged to the housing 7, are displaceably arranged as shown schematically by arrows A, A' in Fig. 2 (see also Fig. 4A) by rotating the detector strip 10, 10' in the pivot 14, 14'. As a result, the position of the detectors 6, 6' in relation to the shaft may easily be adjusted in order to be used for encoder installations with different shaft diameters D having different circumferential curvature β. For a correct encoder installation of the sensor head 3 to a specific shaft diameter, each detector strip 10, 10' is adjusted such that the pivot 14, 14', the detector 6, 6' and a centre C of the shaft 5, are arranged along a straight line SL defining an angle α between the straight line SL and a centre line CL that runs through the centre CS of the sensor head and the shaft centre of rotation C, for the intended installed position of the sensor head 3 for scanning towards a shaft 5.

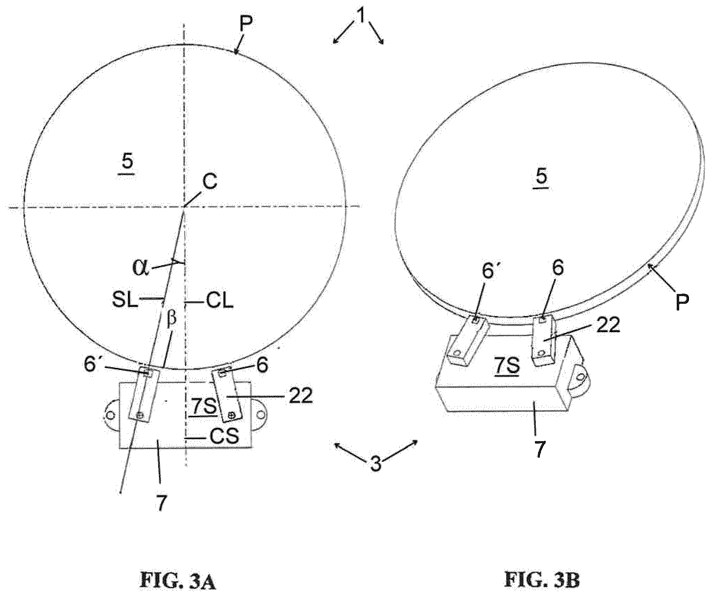

Figure 3A-B schematically shows a sensor head 3 for an encoder assembly 1 in accordance with a further embodiment of the present invention. The shaft 5 is illustrated as a thin disc in Fig. 3A-B. According to the embodiment described and shown with reference to Fig. 3B, the same reference numbers as in the embodiment of Fig. 1-2 have been used for the similar features. The difference compared to the embodiment disclosed above and shown in Fig. 1-2 is that the detectors 6, 6' are displaceably arranged A, A' on the outside 7S of the housing 7 as shown in Fig. 3A-B. The difference is also that the housing 7, besides comprising a hollow body, can be a partly or totally solid body such as a plate or the like. Moreover, each detector strip 10, 10' with a respective detector 6, 6', arranged on the outside 7S of the housing, is encapsulated in a casing 22. Cables, contacts, etc, may run on the outside or inside of the housing 7.

In the embodiment shown in Fig. 1-2, as well as in the other embodiment shown in Figs. 4A-C described below, the housing 7 has a compartment that is defined by a top 7A, a bottom 7B and four walls, a rear wall 7C, a front wall 7D and two respective side walls 7E (see Figs. 4A-C). According to the embodiment described and shown with reference to Figs. 4A-C, the same reference numbers as in the embodiment of Fig. 1-2 have been used for the similar features. Hence, according to the embodiments shown in Fig. 1-2 and 4A-C, the detectors 6, 6', on each detector strip 10, 10', are displaceably arranged A, A' within the housing 7. Consequently, when the detectors 6, 6' are displaceably arranged within the housing, partial sections S1, S2 of the front wall 7D of the sensor head housing 7 facing the shaft 5 (see Fig. 2) have preferably a curvature β' that follows the displacement motion A, A' of each detector on the respective detector strip 10, 10', when displaced by rotation in respective pivot 14, 14', to match the specific curvature β of the shaft 5 or a carrier ring, carrying an encoding member. The short side edge 12' of the first end 12 of each detector strip 10, 10' has a corresponding curvature β' as the partial sections S1, S2. The curvature has a concave circular arc shape, as seen in the direction towards the shaft. As a result, partial sections S1, S2 of the front wall 7D of the sensor head 3 facing a shaft 5, adjacent each short side 12' of each detector strip 10, 10', has a concave circular arc shape, as seen in the direction towards the shaft. With other words, the curvature β' of the partial sections S1, S2 describe a tangent of each curvature β for a specific dimension of the shaft 5 or a carrier ring 4 on the shaft 5.

The length of a bridging section 18 between the partial sections S1, S2 of the front wall 7D depends on the diameter of the shaft and e.g. the magnetic poles of a tape for a magnetic encoder. Typically, the length of the bridging section can be in the range about 30-40 mm.

A front wall 7D of the sensor head 3 facing a shaft 5 can be provided with a slot 20 on the inside of the housing 7, in which slot 20 the outer end 12 of the detector strip 10, 10', where a respective detector 6, 6' is arranged, is inserted. Thus, the front wall 7D is partially thinner at the slot 20, such that the respective detector 6, 6' at the edge of each detector strip 10, 10' can be positioned even closer to the periphery P of the shaft 5, to further improve the reading capability of the detectors 6, 6'.

The whole detector strip 10, 10', or a part of the detector strip 10, 10', can be a circuit board. In e.g. the second end 16 there can be an electric contact 22 for attachment of cable(s) (not shown), a flex strip or the like, for further connection to a main circuit board (not shown) positioned below a lid (not shown) forming the top 7A.

The housing 7 is further provided with variable attachment means for fixing the detector strips 10, 10' in desired position. For instance, on the bottom 7B of the housing, a guiding rail 24 with a number of suitable threaded holes 26 can be arranged. Suitably, the guiding rail 24 has a corresponding curvature β' as the front edge 12' of the detector strips 10, 10' and the partial sections. Each detector strip 10, 10' is provided with a through hole 28 for fastening of a screw (not shown) or the like through the through hole 28 and into one of the threaded holes in the rail. Hence, a detector strip 10, 10' is adjusted and positioned along the guiding rail into a desired position for scanning towards a shaft 5, or a carrier ring on the shaft, and fastened by fastening means.

In the embodiments shown, there are two detector strips 10, 10' having a respective detector 6, 6'. Of course, the number of detector strips and detectors can be more than two.

## Claims

1. A sensor head (3) for an encoder (1) comprising a housing (7) and at least two detectors (6, 6'), the detectors (6, 6') are displaceably (A, A') arranged to the housing (7), wherein each detector (6, 6') is arranged in one end (12) of a respective detector strip (10, 10') comprising a circuit board, and a pivot (14, 14') of each detector strip is arranged at an opposite end (16) of the respective detector strip, wherein the position of each detector (6, 6') is displaceable (A, A') in correspondence with a dimension of a shaft (5) to which the sensor head (3) is adapted for installation and wherein, for each detector, the pivot (14, 14'), the detector (6, 6') and a centre (C) of a shaft (5), when the sensor head (3) is installed to the shaft (5), are arranged along a straight line (SL) when the sensor head (3) is correctly installed..

2. The sensor head (3) according to any of the preceding claims, wherein the detectors (6, 6') are displaceably (A, A') arranged within the housing (7).

3. The sensor head (3) according to any of the preceding claims, wherein a front wall (7D) of the sensor head (3) facing a shaft (5) has a concave circular arc shape, as seen in the direction towards the shaft (5).

4. The sensor head (3) according to claim 3, wherein the front wall (7D) of the sensor head (3) facing a shaft (5) is provided with a slot (20) on the inside of the housing (7), in which slot (20) the outer end (12) of the detector strip (10, 10'), where a respective detector (6, 6') is arranged, is inserted.

5. The sensor head (3) according to claim 1, wherein the detectors (6, 6') are displaceably (A, A') arranged on the outside of the housing (7).

6. The sensor head (3) according to claim 5 and claim 1, wherein each detector strip (10, 10') with a respective detector (6, 6') is encapsulated in a casing (22).

## Patentansprüche

1. Sensorkopf (3) für einen Kodierer (1) umfassend ein Gehäuse (7) und zumindest zwei Detektoren (6, 6'), welche Detektoren (6, 6') im Gehäuse (7) verlagerbar (A, A') angeordnet sind, wobei jeder Detektor (6, 6') in einem Ende (12) eines jeweiligen eine Leiterplatte umfassenden Detektorstreifens (10, 10') angeordnet ist, und ein Drehpunkt (14, 14') jedes Detektorstreifens an einem entgegengesetzten Ende (16) des jeweiligen Detektorstreifens angeordnet ist, wobei die Stellung jedes Detektors (6, 6') entsprechend einer Abmessung einer Welle (5) verlagerbar (A, A') ist, an welcher der Sensorkopf (3) für das Befestigen angepasst ist, und wobei für jeden Detektor der Drehpunkt (14, 14'), der Detektor (6, 6') und eine Mitte (C) einer Welle (5), wenn der Sensorkopf (3) an der Welle (5) befestigt ist, bei ordnungsgemäßem Befestigen des Sensorkopfs (3) entlang einer geraden Linie (SL) angeordnet sind.

2. Sensorkopf (3) nach einem der vorhergehenden Ansprüche, wobei die Detektoren (6, 6') im Gehäuse (7) verlagerbar (A, A') angeordnet sind.

3. Sensorkopf (3) nach einem der vorhergehenden Ansprüche, wobei, wie in der Richtung zur Welle (5) hin gesehen, eine Vorderwand (7D) des einer Welle (5) zugewandten Sensorkopfs (3) eine konkave Kreisbogenform aufweist.

4. Sensorkopf (3) nach Anspruch 3, wobei die Vorderwand (7D) des einer Welle (5) zugewandten Sensorkopfs (3) mit einem Schlitz (20) auf der Innenseite des Gehäuses (7) versehen ist, in welchen Schlitz (20) das Außenende (12) des Detektorstreifens (10, 10'), in dem ein jeweiliger Detektor (6, 6') angeordnet ist, eingesetzt ist.

5. Sensorkopf (3) nach Anspruch 1, wobei die Detektoren (6, 6') auf der Außenseite des Gehäuses (7) verlagerbar (A, A') angeordnet sind.

6. Sensorkopf (3) nach Anspruch 5 und Anspruch 1, wobei jeder Detektorstreifen (10, 10') mit einem jeweiligen Detektor (6, 6') in einer Hülse (22) eingekapselt ist.

## Revendications

1. Tête de capteur (3) destiné à un codeur (1) comprenant un boîtier (7) et au moins deux détecteurs (6, 6'), les détecteurs (6, 6') sont disposés de manière déplaçable (A, A') au niveau du boîtier (7), dans laquelle chaque détecteur (6, 6') est disposé dans l'une extrémité (12) d'une bande de détection (10, 10') respective et comprenant une carte de circuit, et un pivot (14, 14') de chaque bande de détection est disposé à une extrémité opposée (16) de la bande de détection respective, dans laquelle la position de chaque détecteur (6, 6') peut être déplacée (A, A') en correspondance avec une dimension d'un arbre (5) auquel la tête de capteur (3) est adaptée pour l'installation, et dans laquelle pour chaque détecteur, le pivot (14, 14'), le détecteur (6, 6') et un centre (C) d'un arbre (5), lorsque la tête de capteur (3) est installée au niveau de l'arbre (5), sont disposés le long d'une ligne droite (SL) lorsque la tête de capteur (3) est correctement installée.

2. Tête de capteur (3) selon l'une quelconque des revendications précédentes, dans laquelle les détecteurs (6, 6') sont disposés de manière déplaçable (A, A') à l'intérieur du boîtier (7).

3. Tête de capteur (3) selon l'une quelconque des revendications précédentes, dans laquelle une paroi avant (7D) de la tête de capteur (3) faisant face à un arbre (5) présente une forme en arc de cercle concave, comme vue dans la direction vers l'arbre (5).

4. Tête de capteur (3) selon la revendication 3, dans laquelle la paroi avant (7D) de la tête de capteur (3) faisant face à un arbre (5) est pourvue d'une fente (20) à l'intérieur du boîtier (7), la fente (20) dans laquelle l'extrémité extérieure (12) de la bande de détection (10, 10'), où un détecteur (6, 6) respective est disposé, est insérée.

5. Tête de capteur (3) selon la revendication 1, dans laquelle les détecteurs (6, 6') sont disposés de manière déplaçable (A, A') à l'extérieur du boîtier (7).

6. Tête de capteur (3) selon la revendication 5 et la revendication 1, dans laquelle chaque bande de détection (10, 10') avec un détecteur respectif (6, 6') est encapsulée dans une enveloppe (22).
